# EUROPEAN PATENT SPECIFICATION

(11) **EP 3 909 870 B1**
(45) Date of publication and mention of the grant of the patent: **24.07.2024**
(21) Application number: 21173218.5
(22) Date of filing: 11.05.2021
(51) Int. Cl.: B65B 5/02, B65G 47/252, B65B 35/58

(54) **DEVICE FOR OVERTURNING CLOSED BOXES**
VORRICHTUNG ZUM UMKIPPEN VON GESCHLOSSENEN KÄSTEN
DISPOSITIF POUR RENVERSER DES BOÎTES FERMÉES

(30) Priority: 12.05.2020 IT 202000010648
(43) Date of publication of application: 17.11.2021
(73) Proprietor: Altopack S.P.A., 55011 Altopascio (LU) (IT)
(72) Inventor: VEZZANI, Mr. Giuseppe, 6900 PARADISO - LUGANO (CH)
(74) Representative: Mittler, Andrea

(56) References cited:
- WO-A1-2019/081773
- US-A- 3 184 079
- US-A- 4 573 863

## Description

The present invention relates to a device for overturning closed boxes.

The need is felt in the pasta packaging and boxing sector to completely automate the processes, from the making of the pasta to the boxing, to display at the point of sales, limiting the operator's intervention if not eliminating it altogether.

More particularly, the case in which the box is closed by a lid is addressed.

The closed box is usually transported and opened at the point of sale. To display the product, it is customary to remove it from the box or alternatively break off part of the side surface of the box but leaving the base of the box.

WO-2019/0817773 describes a machine having means for forming and laying a lid on a formed box, means for applying glue, and means for rotating the box by 180° about a vertical axis to align the lid with the box when the coupling occurs.

US-6962271 describes a device for overturning a container by 180° about a horizontal axis so that the head becomes the base and vice versa.

Said device is suitable for overturning a container after it has been emptied so that it is ready to be returned for refilling.

Said device is described for isolated use and operates on a closed container without a lid.

The means for gripping the container are flat, or possibly flat with cavities in which to place feet of the container or a pallet supporting the container.

US-4573863 describes a device suitable for overturning cardboard boxes closed by a lid, comprising gripping means which provide combs.

It is the object of the present invention to make a device for overturning cardboard boxes enclosed by a lid about a horizontal axis so that the lid becomes the base of the box.

It is a further object of the present invention that the device is usable in a machine for closing cardboard boxes.

It is a still further object of the present invention that said device has box gripping means suitable to take a closed box resting on a roller conveyor.

According to the invention, said and further objects are achieved by a device for overturning a box closed by a lid so that the lid becomes the base of the box, as defined in claim 1.

Advantageously, the overturning of the box takes place with a continuous movement.

The closed and overturned box may subsequently be positioned on a shelf and its contents made directly available by simply removing the body of the box which, during the step of filling, constituted the base and the containing element of the inserted products.

These and other features of the present invention will be more apparent from the following detailed description of a practical embodiment thereof, shown by way of non-limiting example in the accompanying drawings, in which:
figure 1 shows a first perspective view of a machine for closing cardboard boxes;
figure 2 shows a second perspective view of the machine;
figure 3 shows a front perspective view of an overturning device of a closed box;
figure 4 shows a rear perspective view of the overturning device;
figure 5 shows a front view device of the overturning device;
figure 6 shows a section view taken along line VI-VI of figure 5;
figure 7 shows a front view of the overturning device in a first position;
figure 8 shows a side view of the overturning device in a second position;
figure 9 shows a side view of the overturning device in a third position.

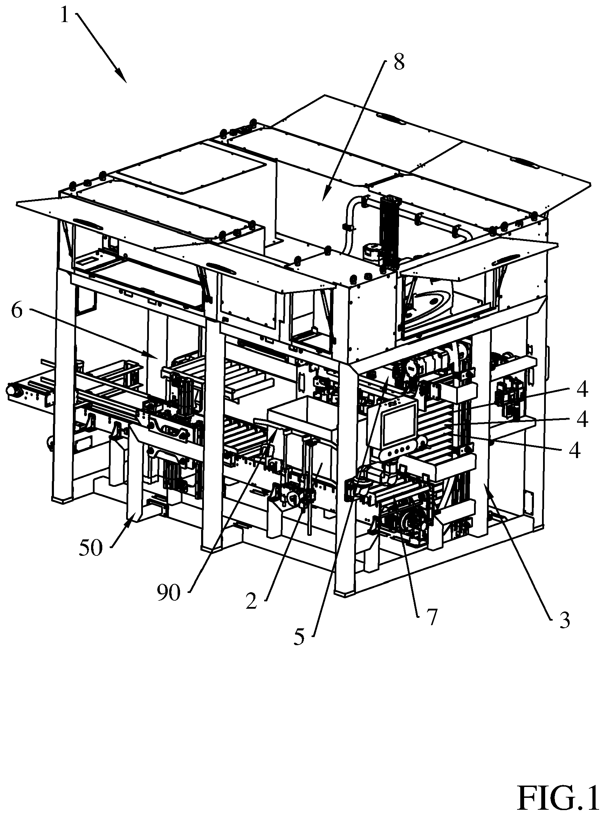

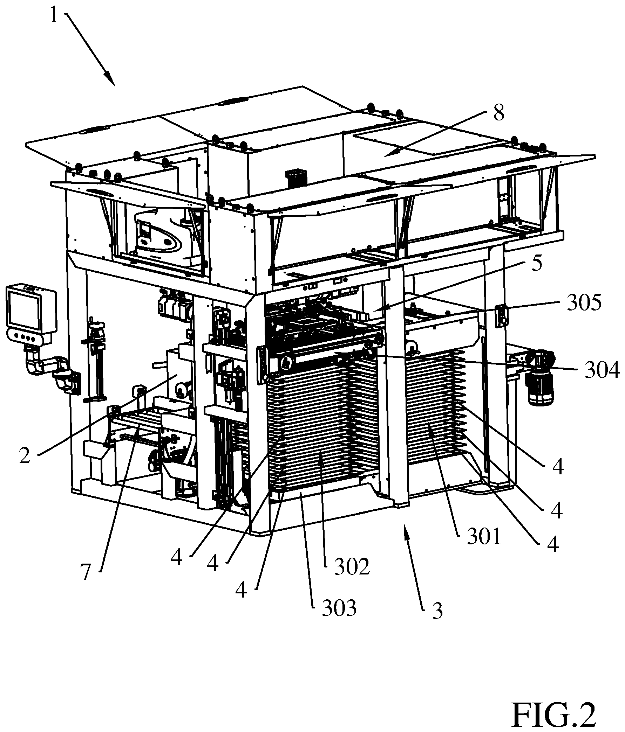

A machine 1 for closing and overturning cardboard boxes 2 comprises a warehouse 3 of lids 4 in the form of a cutting die (i.e., flat), a device 5 for forming and laying the lid 4, and a device 6 for overturning closed boxes 2 with the lid 4 (figures 1 and 2).

The machine 1 further comprises a roller conveyor 7 for horizontally translating previously formed boxes 2, and upper casing 8 for housing the wiring.

The lids 4 in the form of a cutting die are stacked in the warehouse 3.

The forming and laying device 5 of the lid 4 is able to remove one lid 4 at a time from the warehouse 3, take it over a box 2 open on top, and form the lid 4 after laying it over the box 2 to close it completely.

The lid 4 is thus formed after having placed it on the box 2 by exploiting the contrast of the latter.

The machine 1 further comprises gluing means able to dispense glue dots onto the lid 4 before its formation over the box 2 so that after the formation of the lid 4, the lid 4 is blocked onto the box 2 for final closure.

The warehouse 3 is of a vertical type and comprises (figure 2) a first zone 301, in which the operator inserts stacks of lids 4 in the form of a cutting die referring to the side and rear walls, and a second zone 302, in which the lids 4 in the form of a cutting die are lifted and removed by the device 5 one at a time. A roller conveyor allows the lids 4 to slide from the first zone 301 to the second zone 302 at a speed controlled by photocells. The second zone 302 comprises an elevator 303 able to take the lid 4 into the removing position, a pneumatic size equalizer 304, and a horizontal bar retractable support 305 to guarantee a minimum plenum of lids 4 in the form of a cutting die in the steps of reloading of the warehouse 3 itself.

Advantageously, the elevator 303 of the warehouse 3 allows to have the lid 4 to be grasped as high as possible, i.e., just below the device 5 so as to optimize the work.

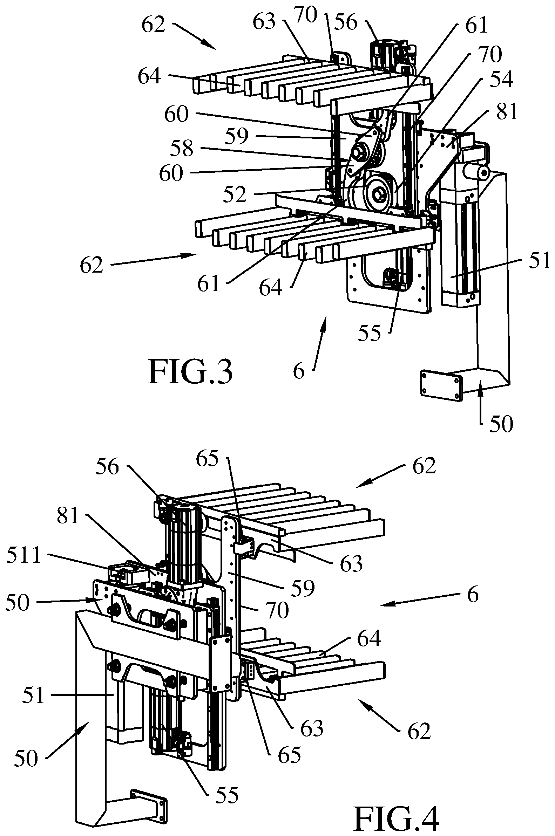

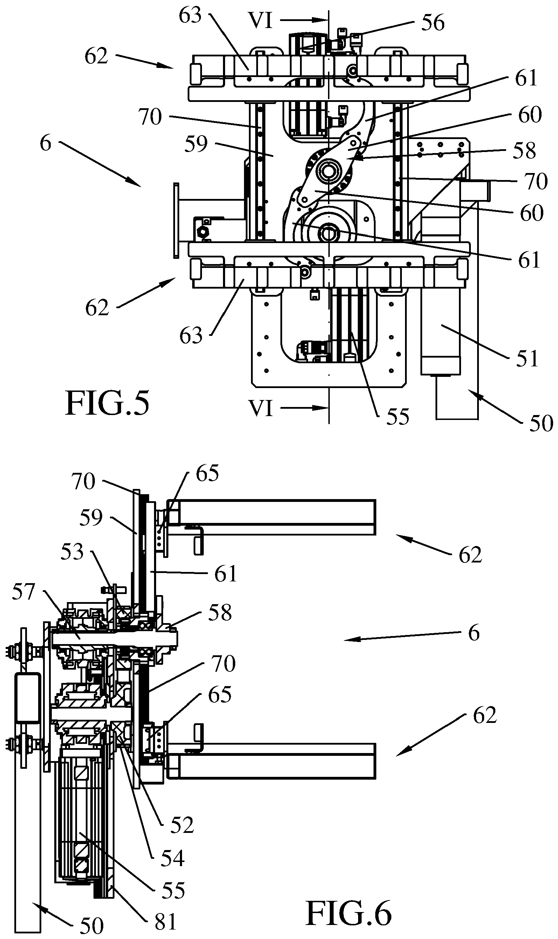

The device 6 for overturning boxes 2 (figures 3-6) already closed with the lid 4 by means of the device 5, comprises a fixed frame 50 to which a cylinder 51 of pneumatic type, able to control the vertical movement of a stem 511, is integral.

A first plate 81 moves integrally with the stem 511 and rotatably supports two gear wheels 52, 53 connected by means of a belt 54, a first motor 55 and a second motor 56. The first motor 55 is able to control the first gear wheel 52, while the second motor 56 is able to drive the rotation of a shaft 57 on which a wheel 58 is keyed.

A second plate 59, preferably H-shaped, is integral with the second gear wheel 53. The shaft 57 is in axis with the second gear wheel 53 and supports the wheel 58 at its end so that the wheel 58 is positioned beyond the second plate 59. The wheel 58 is thus rotatable with respect to the second plate 59, and comprises two arms 60 at the ends of which cranks 61 are rotatably mounted at their first ends.

The second ends of the cranks 61 are rotatably fixed to respective combs 62 at respective edges 63. Each comb 62 comprises prongs 64 able to grip the box 2, and is slidingly associated with the second plate 59 by means of runners 65 sliding along guides 70.

The rotation of the wheel 58 thus determines the approaching or removing of the combs 62, with respect to one another. Conversely, the actuation of the gear wheels 52, 53 determines the rotation of the second plate 59 and thus of the combs 62. On the other hand, the cylinder 51 determines the vertical movement of the second plate 59 and thus of both combs 62.

The device 6 thus comprises means for raising/lowering the combs 62 in an integral manner, including the cylinder 51 and the stem 511, means for rotating the combs 62 in an integral manner, including the gear wheels 52, 53, the first motor 55 and the belt 54, and means for approaching/removing the combs 62 with respect to one another, including the wheel 58, the second motor 56, the cranks 61, the guides 70, the shaft 57.

Operationally, the conveyor 7 moves the box 2, which is already formed and open at the top, to a closing station of the box 2, in which blocking means 90 hold the box 2 stationary (figure 1).

The device 5, configured for a given size of lid 4 and moved by the two-axis manipulator, takes a lid 4 in the form of a cutting die from the warehouse 3. The lid 4 in the form of a flat cutting die lies horizontally so that the suction cups 78 grip the lid 4 by virtue of suction means which create the vacuum.

After taking the lid 4, the manipulator translates the device 5 from the warehouse 3 until it is arranged over the box 2. During said movement, the device 5 transits near gluing means comprising guns able to apply glue dots on the flaps of the lid 4 for blocking it on the box 2 at the end of the forming of the lid 4.

Once the lid 4 in the form of a cutting die is positioned on the vertical of the carton 2, the device 5 is lowered by the manipulator until the lid 4, still in the form of a cutting die, rests on the box 2, more precisely on the top edge which defines the perimeter of the opening of the box 2.

The box 2 acts as a contrast for the forming operations of the lid 4 by means of forming groups.

Advantageously, the lid 4 is formed and laid grip on the box 2, which is thus definitively closed.

The conveyor 7 moves the closed box 2 towards an overturning station in which the device 6 is located. As already mentioned, the conveyor 7 is a roller conveyor, i.e., it is provided with a series of horizontal rollers spaced apart from one another so as to allow the prongs 64 of the comb 62 to descend (each between two rollers) below the sliding level of the box 2: when the box 2 is over said prongs 64, the device 6 is started. The conveyor 7 is provided with a side frame with notches so that the prongs 64 may go below the level of the rollers of the conveyor 7.

Observing figure 3, it may be noted that each comb 62 has the two end prongs 64 offset with respect to the center prongs 64. In particular, the distance between the two combs 62 at the end prongs 64 is smaller with respect to the zone of the central prongs 64: during the gripping, the box 2 thus always tends to position itself in the central zone without any risk of falling during the overturning.

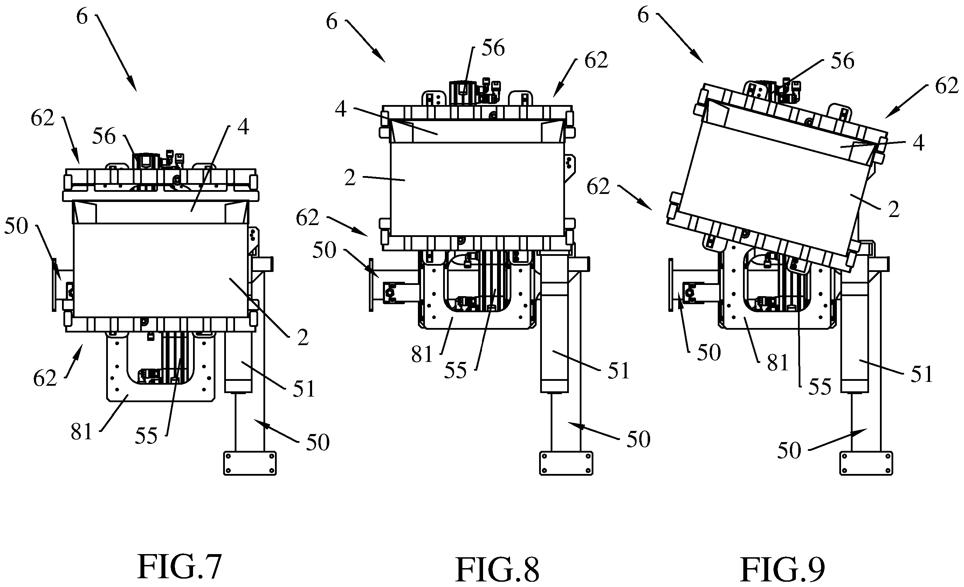

The second motor 56 actuates the wheel 58, which approaches the combs 62 so as to lift the box 2, clamping it between the combs 62 themselves (figure 7); then, the pneumatic cylinder 51 actuates the stem 511 by lifting the second plate 59 and thus both combs 62 gripping the box 2 (figure 8); once an adequate level has been reached, the first motor 55 actuates the belt 54, rotating the box 2 integral with the second plate 59 by 180° about a horizontal axis (figure 9).

The repositioning of the overturned box 2 on the conveyor 7 occurs first by actuating in the opposite direction the pneumatic cylinder 51 which retracts the stem 511 lowering the box 2, until it rests again on the conveyor 7, then by operating the second motor 56 which rotates the wheel 58 in the opposite direction, moving away the combs 62 which leave the overturned box 2 free to continue its sliding along the conveyor 7 up to an exit zone of the machine 1.

Advantageously, the overturning of the box 2 occurs in a continuous movement.

Upon exiting the machine 1, the box 2 is closed with the lid acting as a base.

Advantageously, the closed and overturned box 2 may subsequently be positioned on a shelf and its contents made directly available by simply removing the body of the box 2 which, during the step of filling, constituted the base and the containing element of the inserted products.

The device 6 object of the present invention is herein incorporated into the machine 1 comprising the forming and laying device 5 of the lid 4.

Advantageously, the device 6 may be used in isolation to overturn closed boxes in motion by means of a roller conveyor, or inserted in any machine able to close cardboard boxes with a different device for forming and laying the lid 4.

The comb gripping means make the device 5 particularly suitable for overturning closed boxes moving on a roller conveyor because the prongs 64 can be inserted between the rollers.

The means for approaching/removing the combs 62 are of the connecting rod/crank type thus speeding up and simplifying the movement.

## Claims

1. Device (6) for overturning a box (2) closed by a lid (4) so that the lid (4) becomes the base of the box (2), comprising a fixed frame (50), means for gripping the box (2), means for approaching/removing the gripping means with respect to each other, means for raising/lowering the gripping means and means for rotating the gripping means, the means for raising/lowering and the means for rotating integrally moving the gripping means, wherein said gripping means comprise combs (62),
**characterized in that**
the raising/lowering means comprise a first movable plate (81), a pneumatic cylinder (51) integral with the fixed frame (50), a stem (511) controlled for vertical movement by the cylinder (51), wherein the first movable plate (81) is integral with the stem (511),
the means for approaching/removing the combs (62) comprise a wheel (58) which is provided with two arms (60) at the ends of which cranks (61) are rotatably mounted at their first ends, the second ends of the cranks (61) being rotatably fixed to respective combs (62) slidingly associated with a second movable plate (59) of the overturning device (6) by means of runners (65) sliding along guides (70), wherein the second movable plate (59) is rotatable,
wherein the rotation means comprise two gear wheels (52, 53) connected by a belt (54), wherein a first motor (55) is able to control the first gear wheel (52), while a second motor (56) is able to control the rotation of the wheel (58) independently of the rotation of said second movable plate (59),
wherein
the first movable plate (81) rotatably supports the two gear wheels (52, 53), the first motor (55) and the second motor (56),
the second movable plate (59) is integral with the second gear wheel (53),
the rotation of the wheel (58) determining the approach/removal of the combs (62) with respect to each other, the actuation of the gear wheels (52, 53) determining the rotation of the second plate (59) and therefore of the combs (62), the cylinder (51) determining the vertical movement of the second plate (59) and therefore of both combs (62).

2. Device (6) according to claim 1, **characterized in that** each comb (62) comprises two end prongs (64) and central prongs (64) between said two end prongs (64), wherein the two end prongs (64) are offset with respect to the central prongs (64), the distance between the two combs (62) at the end prongs (64) being smaller than the distance at the central prongs (64).

3. Machine (1) for closing boxes (2) made of cardboard, comprising a warehouse (3) of lids (4) in the form of a cutting die, a conveyor (7) for the horizontal translation of already formed boxes (2), and a device (5) for forming and laying the lid (4), **characterized in that** it further comprises a device (6) for overturning boxes (2) closed with the lid (4) according to any of the preceding claims.

## Patentansprüche

1. Vorrichtung (6) zum Umkippen einer durch einen Deckel (4) verschlossenen Schachtel (2), so dass der Deckel (4) zum Boden der Schachtel (2) wird, mit einem festen Rahmen (50), Mitteln zum Greifen der Schachtel (2), Mitteln zum Annähern/Entfernen der Greifmittel in Bezug aufeinander, Mitteln zum Anheben/Absenken der Greifmittel und Mitteln zum Drehen der Greifmittel, wobei die Mittel zum Anheben/Absenken und die Mittel zum Drehen die Greifmittel integral bewegen, wobei die Greifmittel Kämme (62) umfassen,
**dadurch gekennzeichnet, dass**
die Mittel zum Anheben/Absenken eine erste bewegliche Platte (81), einen mit dem festen Rahmen (50) fest verbundenen Pneumatikzylinder (51), einen durch den Zylinder (51) vertikal beweglich gesteuerten Schaft (511) umfassen, wobei die erste bewegliche Platte (81) mit dem Schaft (511) fest verbunden ist,
die Mittel zum Annähern/Entfernen der Kämme (62) ein Rad (58) umfassen, das mit zwei Armen (60) versehen ist, an deren Enden Kurbeln (61) an ihren ersten Enden drehbar angebracht sind, wobei die zweiten Enden der Kurbeln (61) drehbar an entsprechenden Kämmen (62) befestigt sind, die gleitend mit einer zweiten beweglichen Platte (59) der Umkippvorrichtung (6) mittels Kufen (65) verbunden sind, die entlang von Führungen (70) gleiten, wobei die zweite bewegliche Platte (59) drehbar ist,
wobei die Mittel zum Drehen zwei Zahnräder (52, 53) umfassen, die durch einen Riemen (54) verbunden sind, wobei ein erster Motor (55) in der Lage ist, das erste Zahnrad (52) zu steuern, während ein zweiter Motor (56) in der Lage ist, die Drehung des Rades (58) unabhängig von der Drehung der zweiten beweglichen Platte (59) zu steuern,
wobei
die erste bewegliche Platte (81) die beiden Zahnräder (52, 53), den ersten Motor (55) und den zweiten Motor (56) drehbar lagert,
die zweite bewegliche Platte (59) fest mit dem zweiten Zahnrad (53) verbunden ist und
die Drehung des Rades (58) die Annäherung/Entfernung der Kämme (62) zueinander bestimmt, die Betätigung der Zahnräder (52, 53) die Drehung der zweiten Platte (59) und somit der Kämme (62) bestimmt, wobei der Zylinder (51) die vertikale Bewegung der zweiten Platte (59) und somit der beiden Kämme (62) bestimmt.

2. Vorrichtung (6) nach Anspruch 1, **dadurch gekennzeichnet, dass** jeder Kamm (62) zwei Endzinken (64) und Mittelzinken (64) zwischen den beiden Endzinken (64) aufweist, wobei die beiden Endzinken (64) gegenüber den Mittelzinken (64) versetzt sind und der Abstand zwischen den beiden Kämmen (62) an den Endzinken (64) kleiner ist als der Abstand an den Mittelzinken (64).

3. Maschine (1) zum Verschließen von Schachteln (2) aus Pappe, mit einem Lager (3) von Deckeln (4) in Form einer Stanzform, einem Förderer (7) für die horizontale Verschiebung von bereits geformten Schachteln (2) und einer Vorrichtung (5) zum Formen und Auflegen des Deckels (4), **dadurch gekennzeichnet, dass** sie außerdem eine Vorrichtung (6) zum Umkippen von mit dem Deckel (4) verschlossenen Schachteln (2) nach einem der vorhergehenden Ansprüche aufweist.

## Revendications

1. Dispositif (6) pour retourner une boîte (2) fermée par un couvercle (4) de sorte que le couvercle (4) devient la base de la boîte (2), comprenant un cadre fixe (50), des moyens pour saisir la boîte (2), des moyens pour rapprocher/retirer les moyens de saisie les uns par rapport aux autres, des moyens pour soulever/abaisser les moyens de saisie et des moyens pour faire tourner les moyens de saisie, les moyens de soulèvement/d'abaissement et les moyens de rotation déplaçant de manière solidaire les moyens de saisie, dans lequel lesdits moyens de saisie comprennent des peignes (62),
**caractérisé en ce que**
les moyens de soulèvement/d'abaissement comprennent une première plaque mobile (81), un vérin pneumatique (51) solidaire du cadre fixe (50), une tige (511) commandée quant à un mouvement vertical par le vérin (51), dans lequel la première plaque mobile (81) est solidaire de la tige (511),
les moyens d'approche/de retrait des peignes (62) comprennent une roue (58) qui est munie de deux bras (60) aux extrémités desquels des manivelles (61) sont montées de manière rotative au niveau de leurs premières extrémités, les secondes extrémités des manivelles (61) étant fixées de manière rotative à des peignes respectifs (62) associés de manière coulissante à une seconde plaque mobile (59) du dispositif de retournement (6) au moyen de coulisseaux (65) coulissant le long de guides (70), dans lequel la seconde plaque mobile (59) est rotative,
dans lequel les moyens de rotation comprennent deux roues dentées (52, 53) reliées par une courroie (54), dans lequel un premier moteur (55) est capable de commander la première roue dentée (52), tandis qu'un second moteur (56) est capable de commander la rotation de la roue (58) indépendamment de la rotation de ladite seconde plaque mobile (59),
dans lequel
la première plaque mobile (81) supporte en rotation les deux roues dentées (52, 53), le premier moteur (55) et le second moteur (56),
la seconde plaque mobile (59) est solidaire de la seconde roue dentée (53),
la rotation de la roue (58) déterminant le rapprochement/retrait des peignes (62) l'un par rapport à l'autre, l'actionnement des roues dentées (52, 53) déterminant la rotation de la seconde plaque (59) et donc des peignes (62), le vérin (51) déterminant le mouvement vertical de la seconde plaque (59) et donc des deux peignes (62).

2. Dispositif (6) selon la revendication 1, **caractérisé en ce que** chaque peigne (62) comprend deux fourches d'extrémité (64) et des fourches centrales (64) entre lesdites deux fourches d'extrémité (64), dans lequel les deux fourches d'extrémité (64) sont décalées par rapport aux fourches centrales (64), la distance entre les deux peignes (62) au niveau des fourches d'extrémité (64) étant inférieure à la distance au niveau des fourches centrales (64).

3. Machine (1) de fermeture de boîtes (2) constituées de carton, comprenant un stock (3) de couvercles (4) sous la forme de matrice de découpe, un convoyeur (7) de translation horizontale de boîtes déjà formées (2), et un dispositif (5) pour former et poser le couvercle (4), **caractérisée en ce qu'**elle comprend en outre un dispositif (6) de retournement de boîtes (2) fermées par le couvercle (4) selon l'une quelconque des revendications précédentes.
